# EUROPÄISCHE PATENTSCHRIFT

(11) **EP 2 126 378 B1**
(45) Veröffentlichungstag und Bekanntmachung des Hinweises auf die Patenterteilung: **15.06.2011**
(21) Anmeldenummer: 07857055.3
(22) Anmeldetag: 21.12.2007
(51) Int. Cl.: F16B 7/18

(54) **ZUG/KIPPVERBINDERSYSTEM**
TENSILE/TILTING CONNECTOR SYSTEM
SYSTÈME DE RACCORD À TRACTION/À BASCULE

(30) Priorität: 10.01.2007 DE 202007000370 U
(43) Veröffentlichungstag der Anmeldung: 02.12.2009
(73) Patentinhaber: STAUSS, Ulrich, 78628 Rottweil (DE)
(72) Erfinder: STAUSS, Ulrich, 78628 Rottweil (DE)
(74) Vertreter: Wagner, Kilian
(86) Internationale Anmeldenummer: PCT/EP2007/011340
(87) Internationale Veröffentlichungsnummer: WO 2008/083832

(56) Entgegenhaltungen:
- DE-A1- 19 825 426
- DE-C1- 4 127 284
- DE-U1- 9 313 596
- DE-U1- 20 210 133

## Beschreibung

Die Erfindung betrifft ein Verbindersystem mit einem Verbinder, einer Befestigungsschraube und einer Ankerschraube nach dem Oberbegriff des Anspruchs 1 sowie einen Profilverbund.

DE 198 25 426 B4 und DE 199 25 993 A1 offenbaren jeweils ein in eine T-Nut einsetzbares Befestigungselement für einen Näherungsschalter, welches zu den Flanken der T-Nut in einer Verklemmstellung bringbar ist, sich jedoch nicht als Befestigungsschraube für ein Verbindersystem der eingangs genannten Art eignet. Ein Verbinder, wie er bei Profilverbunden, üblicherweise einsetzbar ist, ist in US 6,582,149 B1 offenbart. Beispiele von Profilverbunden sind beispielsweise in DE 202 03 283 U1 und US 7,004,667 B2 beschrieben.

Ein Verbindersystem, bei dem ein Verbinder als ein Zugverbinder ausgebildet ist, ist in DE 4127284 Cl offenbart. Eine dementsprechende Profilkonstruktion aus Profilstäben weist mindestens jeweils eine mit mindestens einer Hinterschneidung versehene Längsnut auf, wobei zumindest ein Teil der Profilstäbe mindestens eine Längsbohrung hat, die zumindest an einem ihrer Enden ein Gewinde aufweist, das für den Eingriff mit einer Ankerschraube vorgesehen ist. Mittels der Ankerschraube ist ein von der Ankerschraube durchsetzter und mindestens einen Schenkel aufweisender Verbinder an dem zugehörigen ersten Profilstab festlegbar, der in die Längsnut des zu verbindenden zweiten Profilstabs so eingreift, dass er mindestens eine Hinterschneidung mit einem Schenkel hintergreift. Der Verbinder ist mit einem vorgebbaren Spiel an dem ersten Profilstab festlegbar und greift unter zumindest teilweisem Ausgleich dieses Spiels in die Längsnut des zweiten Profilstabs ein. Eine Befestigungsschraube ist in einer den Verbinder vollständig durchgreifenden Bohrung mit Innengewinde aufgenommen und stützt sich mit ihrem einen Ende gegen eine Ankerschraube ab, so dass der Verbinder mit mindestens einem Schenkel so gegen einen Profilsteg einer Hinterschneidung gepresst wird, dass hierdurch über den Verbinder die Profilstäbe fest miteinander verbunden werden. Der genannte Verbinder vermittelt also einen Pressdruck, welchen die Befestigungsschraube auf den Kopf der Ankerschraube ausübt.

Ein Kippverbinder ist in DE 20 2005 013 097.4 U1 offenbart. Dieser ist zum Festlegen in einer mit einer Hinterschneidung versehenen Nut eines ersten Profils geeignet und in Form eines entlang einer Längserstreckung gestreckten Verbinderkörpers gebildet. Der Verbinderkörper weist auf: einen Sockel und einen von dem Sockel aufragenden, entlang der Längserstreckung sich erstreckenden Steg zum seitlichen Festlegen des Kippverbinders in der Nut, wobei ein vom Steg überstehender Sockelbereich eine Anschlagsfläche zum Hintergreifen der Hinterschneidung bildet, und ein erstes Loch für eine Ankerschraube zur Einführung in ein zweites Profil und ein zweites Loch für eine als Hebelschraube ausgebildete Befestigungsschraube vorgesehen ist. Die Anschlagfläche weist einen ersten Anschlagbereich und einen zweiten Anschlagbereich auf, die mit einem Freistellwinkel zueinander angeordnet sind, wodurch eine zwischen ihnen liegende Kippkante gebildet ist, welche zur Anlage und Bildung eines Hebelansatzes auf einer Rückseite der Hinterschneidung vorgesehen ist.

Ein Verbindersystem der eingangs genannten Art ist im deutschen Gebrauchsmuster G 94 14 884.8 offenbart.

Beide Verbinder gemäß dem Stand der Technik haben eine im Wesentlichen winklige dreidimensionale Formgebung und sind in der Regel als vergleichsweise kostenaufwändiges Feingussteil zu bilden.

Wünschenswert wäre es, einen Verbindung vergleichsweise kostengünstiger herstellbar auszuführen und dennoch eine sichere Verbindung bei einem Profilverbund zu gewährleisten.

An dieser Stelle setzt die Erfindung an, deren Aufgabe es ist, ein Verbindersystem mit einer Befestigungsschraube und einem Verbinder anzugeben, das vergleichsweise kostengünstig herstellbar ist und dennoch eine sichere Verbindung für einen Profilverbund zur Verfügung stellen kann. Weitere Aufgabe ist es, einen entsprechenden Profilverbund anzugeben. Die Aufgabe wird mit einem Verbindersystem mit den Merkmalen des Anspruchs 1 und einem Profilverbund mit den Merkmalen des Anspruchs 25 gelöst.

Bei dem Verbinder erstreckt sich erfindungsgemäß der Verbinderkörper im Wesentlichen flach entlang einer Verbinderkörperebene. Vorzugsweise beträgt die größte Dicke des Verbinderkörpers nicht mehr als 20% einer Längserstreckung des Verbinderkörpers, d. h. letzterer ist ein bevorzugter, im Wesentlichen flacher Verbinderkörper. Insbesondere wird die Dicke über einen maßgeblichen und insbesondere im Wesentlichen flächigen Bereich angenommen. Die Erfindung hat erkannt, dass es mit dem Verbindersystem gemäß dem Konzept der Erfindung möglich ist, den Verbinderkörper vergleichsweise kostengünstig in Form eines Blechteils und/oder eines Stanzteils und/oder eines Biegeteils herzustellen. Der wesentliche Vorteil liegt darin, dass eine vergleichsweise kostenaufwändige Feingussherstellung eines Verbinderkörpers entfallen kann.

Bei der Befestigungsschraube ist erfindungsgemäß ein Flansch angeformt, der sich von einem Schraubenkopf radial nach außen erstreckt.

Die Erfindung hat erkannt, dass es mit einer derart ausgebildeten Befestigungsschraube möglich ist, ein Abstützen des Flansches an der durch den Profilsteg gebildeten Hinterschneidung der Nut zu erreichen. Beim Anziehen der Befestigungsschraube wird aufgrund des mit dem Innengewinde der zweiten Öffnung des Verbinderkörpers in Eingriff stehenden Außengewindes des Schafts erreicht, dass beim auf der dem Nutinneren zugewendeten Hinterschneidungsseite anliegenden Flansch die genannte Abstützwirkung erzielt und somit der Verbinder weiter zum Nutinneren in Richtung Nutgrund bewegt wird.

Das Verbindersystem der eingangs genannten Art weist erfindungsgemäß weiter eine Ankerschraube auf, wobei gemäß dem Konzept der Erfindung die Ankerschraube zur Anordnung in der ersten Öffnung des Verbinders vorgesehen ist und mindestens eine Befestigungsschraube zur Anordnung in mindestens einer zweiten Öffnung vorgesehen ist.

Eine zum Nutinneren geführte Bewegung des Verbinders führt zu einer Zugwirkung an der Ankerschraube, die mit einem Schaft zur Festlegung in einer Aufnahmeöffnung, vorzugsweise in einer zentralen Aufnahmeöffnung eines zweiten Profils eines Profilverbunds vorgesehen ist. Gemäß dem Konzept der Erfindung wird auf diese Weise erreicht, dass das in der Regel senkrecht auf dem ersten Profil aufstehende zweite Profil an das Profil herangezogen und dadurch am ersten Profil festgelegt wird.

Dementsprechend führt das Konzept der Erfindung auf einen Profilverbund der eingangs genannten Art mit einem ersten Profil mit einer durch einen Profilsteg gebildeten Hinterschneidung versehenen Nut und einem zweiten Profil mit einer Aufnahmeöffnung und einem Verbindersystem gemäß dem Konzept der Erfindung. Das erste Profil und das zweite Profil können dabei im Wesentlichen gleich ausgebildet sein.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung, sowie hinsichtlich weiterer Vorteile zu realisieren.

Gemäß einer besonders bevorzugten Weiterbildung der Erfindung weist der Verbinderkörper genau eine zweite mit einem Innengewinde versehene Öffnung für eine Befestigungsschraube auf. Dies ist vorteilhaft ein besonders einfach auszubildender geringgewichtiger Verbinderkörper. Hinsichtlich des Verbindersystems ist gemäß dieser Weiterbildung vorgesehen, dass genau eine Befestigungsschraube in Funktionsstellung als eine Hebelschraube wirkt, und der Verbinder in Funktionsstellung als ein Kippverbinder mit einer Kippkante jenseits der ersten Öffnung wirkt. Bei dieser Weiterbildung der Erfindung wird der Verbinderkörper beim Drehen der Befestigungsschraube auf der der Kippkante gegenüberliegenden Seite in das Nutinnere gerückt, während die Kippkante an der dem Nutinneren zugewandten Fläche der Hinterschneidung anliegt. Es hat sich hinsichtlich dieser Weiterbildung als besonders vorteilhaft erwiesen, dass eine anwendungsangepasste vorteilhafte Ausbildung eines Hebelarms durch eine Längenänderung des Verbinderkörpers bzw. eine Änderung des Lochabstands im Verbinderkörper erreicht werden kann. Je weiter die Kippkante von der Achse der Befestigungsschraube entfernt ist, desto höher ist die Hebelwirkung. Auf diese Weise kann praktisch eine für jedes Anzugsmoment geeignete Hebelauslegung zur Verfügung gestellt werden.

Die Lage der Befestigungsschraube kann auch eine Fixierung des senkrecht stehenden Profils bewirken, indem der Kopfdurchmesser der Befestigungsschraube und die Nutbreite so aufeinander abgestimmt sind, dass der Kopf in der Nut vergleichsweise wenig Spiel hat. Dies hat den Vorteil, dass das senkrechte Profil hinsichtlich einer Verdrehung gehindert ist und die beiden Profile lagerichtig zueinander angeordnet sind, insbesondere ohne dass Profilecken überstehen.

Gemäß einer besonders bevorzugten ersten Variante dieser Weiterbildung der Erfindung ist die erste Öffnung für die Ankerschraube in Form eines gewindefreien Schraubenloches gebildet - d.h. der Lochrand umgibt die Ankerschraube vollständig. Die Ankerschraube kann beispielsweise zusätzlich mit einer Hülse versehen in einer mittigen Aufnahmeöffnung des zweiten Profils durch einen Gewindeschluss festgelegt sein und im Übrigen mit ihrem Schraubenkopf in der ersten Öffnung gehalten sein. Alternativ zur Hülse kann der Verbinderkörper an seiner Oberseite einen Kragen an der ersten Öffnung für die Ankerschraube aufweisen.

Gemäß einer zweiten besonders bevorzugten Variante dieser Weiterbildung ist die erste Öffnung in Form eines in Längsrichtung des Verbinderkörpers verlaufenden durch gabelartige Arme berandeten Schlitzes des Verbinderkörpers gebildet. Dies hat den Vorteil, dass die Ankerschraube nicht zwangsläufig in die erste Öffnung eingebracht werden muss, sondern die zweite Variante dieser Weiterbildung ermöglicht es, dass der Verbinderkörper mit dem Schlitz unterhalb eines Schraubenkopfes der Ankerschraube über den Schaft der Ankerschraube geschoben werden kann, so dass der Kopf der Ankerschraube hinter den gabelartigen Armen des Schlitzes beim Festziehen des Verbindersystems anschlägt. Vorzugsweise ist dazu der Kopf der Ankerschraube zum Schaft hin angesenkt, insbesondere tailliert. Durch letztere Maßnahme kann der Schlitz an vorgegebener Position entlang der Schraubenachse über die Taille der Ankerschraube geschoben werden. Die zweite Variante dieser Weiterbildung eignet sich ganz besonders zur Anwendung beim Einbringen eines zweiten Profils in einen bestehenden Profilverbund, ohne dass bereits bestehende Profilverbindungen gelöst werden müssten, da der Verbinderkörper aufgrund seines seitlich offenen Schlitzes zwanglos über den Schaft der Ankerschraube geschoben werden kann. Vorzugsweise weist der Schlitz an seiner dem Kopf der Ankerschraube zugewandten Seite eine Senkung auf. Dies hat den Vorteil, dass der Kopf am Verbinderkörper insbesondere während des Anziehens der Befestigungsschraube, besonders gut und bereits frühzeitig festgelegt ist. Zu diesem Zweck könnte der Schlitz an seinem geschlossenen Ende auch eine dem Kopf der Ankerschraube angepasste Aufweitung aufweisen.

Gemäß einer besonders bevorzugten dritten Variante der Erfindung sind genau zwei Befestigungsschrauben zur Anordnung in den genau zweiten Öffnungen vorgesehen, wobei die zwei Befestigungsschrauben in Funktionsstellung jeweils als eine Zugschraube wirken und der Verbinder in Funktionsstellung als ein Zugverbinder wirkt. Die dritte Variante der Erfindung ermöglicht ein besonders stabiles Festlegen eines zweiten Profils an einem ersten Profil, indem vorzugsweise beidseitig der mittigen Ankerschraube jeweils eine Befestigungsschraube angezogen wird. Dadurch wird der zugeordnete Verbinder des Verbindersystems parallel beabstandet zum Profilsteg in das Nutinnere vorgeschoben und somit das auf dem ersten Profil senkrecht aufstehende zweite Profil zu diesem hingezogen und dadurch festlegt.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

In Weiterbildung der Erfindung ist mit Vorteil vorgesehen, dass der Flansch (28, 29) der Befestigungsschraube (17, 18) zwischen Schraubenkopf (31) und Schaft (27) angeordnet ist.

In Weiterbildung der Erfindung ist mit Vorteil vorgesehen, dass der Schraubenkopf (31) der Befestigungsschraube (17) einen INBUS-Einstecknapf (33) oder einen Innensechsrund-Einstecknapf aufweist.

In Weiterbildung der Erfindung ist mit Vorteil vorgesehen, dass der Flansch (28, 29) der Befestigungsschraube (18) entlang seines Umfangs wenigstens eine Unterbrechung (26) aufweist.

In Weiterbildung der Erfindung ist mit Vorteil vorgesehen, dass der Schraubenkopf (31) der Befestigungsschraube (18) im Bereich der Unterbrechung (26) die Radialabmessungen des INBUS-Einstecknapfes (33) aufweist.

In Weiterbildung der Erfindung ist mit Vorteil vorgesehen, dass der Flansch (28) der Befestigungsschraube (18) eine Rampe (24) aufweist, insbesondere eine Rampe (24) mit einer Vierteldrehungssteigung.

In Weiterbildung der Erfindung ist mit Vorteil vorgesehen, dass die erste Öffnung (21, 21', 63) in Form eines gewindefreien Schraubenloches gebildet ist.

In Weiterbildung der Erfindung ist mit Vorteil vorgesehen, dass die erste Öffnung (21') in Form eines in Längsrichtung des Verbinderkörpers (73) verlaufenden durch gabelartige Arme (75) berandeten Schlitzes des Verbinderkörpers (73) gebildet ist.

Die Figuren der Zeichnung zeigen im Einzelnen:
- Fig. 1:: eine Schnittdarstellung eines Profilverbundes mit einem Verbindersystem als eine Ausführungs- form nach der ersten Variante der Erfindung;
- Fig. 1A, Fig. 1B:: eine perspektivische Darstellung (1A) und Explosionsdarstellung (1B) der bevorzugten Aus- führungsform des Verbindersystems von Fig. 1;
- Fig. 2:: eine Schnittdarstellung eines Profilverbundes mit einem Verbindersystem gemäß einer Ausfüh- rungsform nach der dritten Variante der Erfin- dung;
- Fig. 3A, Fig. 3B:: eine perspektivische Darstellung (3A) und Explosionsdarstellung (3B) eines Verbinder- systems gemäß als eine Ausführungsform nach der zweiten Variante der Erfindung, welches Verbin- dersystem im Übrigen - ähnlich wie in Fig. 1, Fig. 1A, Fig. 1B dargestellt - zum Zusammenset- zen eines Profilverbundes eingesetzt werden kann, wobei jedoch das Verbindersystem dieser Ausführungsform auch seitlich über eine Anker- schraube geschoben werden kann.

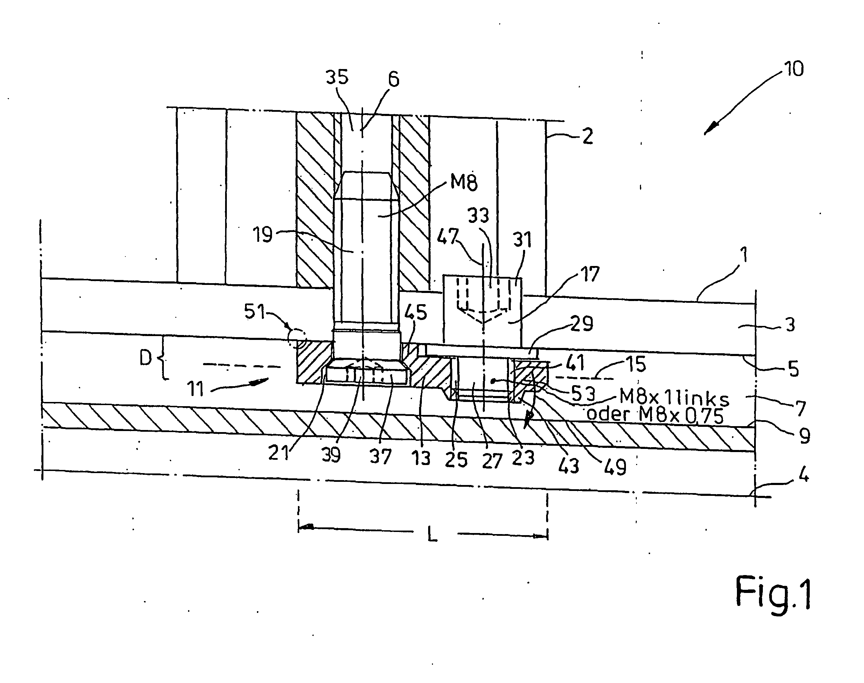

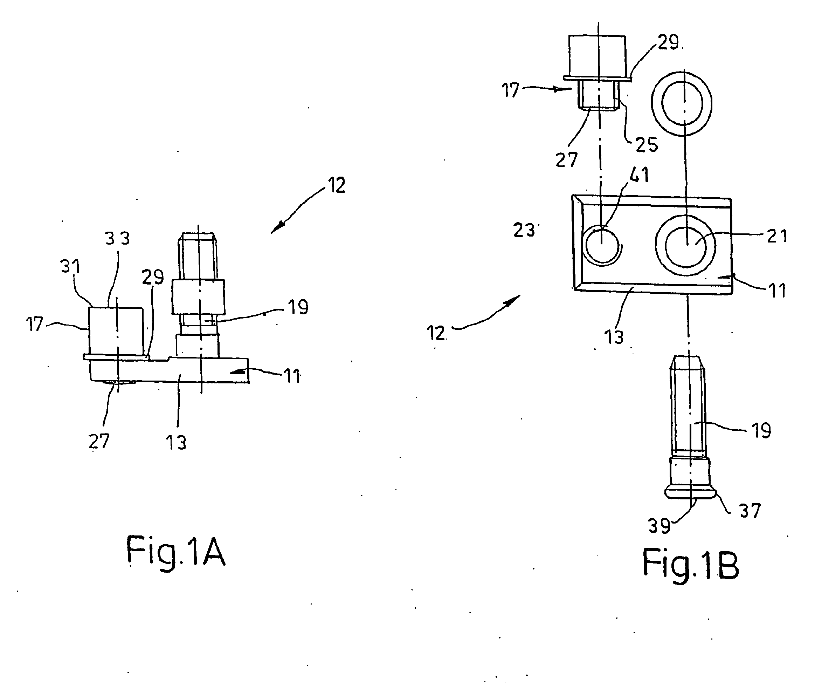

Fig. 1 zeigt einen Profilverbund 10 mit einem Verbinder 11 in einer Ausführungsform gemäß der ersten Variante der Erfindung. Der vorliegende Profilverbund 10 hat ein erstes Profil 1 und ein zweites Profil 2, welche im Wesentlichen gleich ausgebildet sind. Beim ersten Profil 1 ist die durch einen Profilsteg 3 gebildete Hinterschneidung 5 gezeigt, zwischen welcher Hinterschneidung 5 und dem Nutgrund 9 eine Nut 7 verläuft, welche zwischen zwei sich gegenüberstehenden nicht näher gezeigten Profilstegen 3 eine Engstelle hat und sich zum Nutgrund 9 hin aufweitet. Mit 4 und 6 sind die jeweiligen Symmetrieachsen der Profile 1 und 2 bezeichnet.

Der Verbinder 11 weist einen Verbinderkörper 13 auf, der sich im Wesentlichen flach entlang einer gestrichelt angedeuteten Verbinderkörperebene 15 erstreckt. Vorliegend beträgt die größte Dicke D des Verbinderkörpers 13 nicht mehr als 20% einer Längserstreckung L des Verbinderkörpers 13.

Das in Fig. 1A und Fig. 1B nochmals perspektivisch wiedergegebene Verbindersystem 12 aus Verbinder 11, Befestigungsschraube 17 und Ankerschraube 19 sieht vor, dass, wie in Fig. 1 dargestellt, die Ankerschraube 19 zur Anordnung in der ersten Öffnung 21 des Verbinders 11 vorgesehen ist und genau eine Befestigungsschraube 17 zur Anordnung in der zweiten Öffnung 23 des Verbinders 11 vorgesehen ist. Die Befestigungsschraube 17 weist einends einen Außengewinde 25 tragenden Schaft 27 auf und einen Flansch 29, der sich von einem Schraubenkopf 31, vorliegend in Form eines INBUS-Einstecknapfes 33, radial nach außen erstreckt. In Abwandlung können andere Einstecknäpfe realisiert werden, beispielsweise ein Innensechsrund-Einstecknapf.

Die Ankerschraube 19 ist in einer entlang der Achse 6 verlaufenden mittleren Aufnahmeöffnung 35 des zweiten Profils 2 eingeschraubt. Sie ist mit ihrem Senkkopf 37, welcher wiederum einen INBUS-Napf 39 aufweist, in der genau einen zweiten Öffnung 21 des Verbinderkörpers 13 formschlüssig ohne Gewinde gehalten. Dagegen trägt die genau eine zweite Öffnung 23 ein Innengewinde 41, in welches das Außengewinde 25 des Schafts 27 der Befestigungsschraube 17 eingreift.

Bei der in Fig. 1, Fig. 1A und Fig. 1B dargestellten Ausführungsform eines Verbinders 11 ist der Verbinderkörper 13 im Bereich der ersten Öffnung 21 und im Bereich der zweiten Öffnung 23 verstärkt, indem er jeweils eine etwas größere Dicke über einen maßgeblichen Bereich annimmt. Vorliegend ist dies vor allem dadurch realisiert, dass die zweite Öffnung 23 einen in diesem Fall dem Nutgrund 9 zugewandten Gewindekragen 43 aufweist. Ebenso ist die erste Öffnung 21 in ihrer der Hinterschneidung 5 zugewandten Seite 45 durch eine absatzartige Verdickung verstärkt. In einer Abwandlung dazu könnte zusätzlich oder alternativ zum Absatz auch ein Kragen an der ersten Öffnung 21 am Verbinderkörper 13 angeformt sein.

Weitere hier nicht gezeigte Verstärkungen können bei Ausführungsformen angebracht werden, bei denen sich die Dicke D des Verbinders 11 als zu gering erweisen sollte, um einer Beanspruchung beim Bilden des Profilsverbunds 10 gerecht zu werden. So können bei anderen nicht gezeigten Ausführungsformen zusätzlich oder alternativ eine oder mehrere, insbesondere entlang einer länglichen Erstreckung verlaufende, Versteifungsrippen und/oder ein oder mehrere, insbesondere entlang einer länglichen Erstreckung verlaufende, insbesondere seitliche, Stege vorgesehen sein. Bevorzugt können solche Stege bei einem Stanz- und/oder Biegeteil in Form eines Bleches - wie beim vorliegenden Verbinderkörper 13 - als hochgebogene Stege gebildet werden. Zusätzlich oder alternativ können eine oder mehrere Sicken oder längliche Noppen im Verbinderkörper 13 eingedrückt werden.

Bei weiteren hier nicht gezeigten Varianten der Ausführungsform nach Fig. 1, Fig. 1A und Fig. 1B kann auch die Gewindeachse 47 in der zweiten Öffnung 23 schräg gegen eine Senkrechte zur Verbinderkörperebene 15 verlaufen. Dies erhöht den Handhabungskomfort beim Anziehen der Befestigungsschraube 17, da ein Inbusschlüsselsteg in den INBUS-Schlüsselstift einfacher in den INBUS-Napf 33 eingesetzt werden kann. Eine schräggestellte Gewindeachse für die Befestigungsschraube 17 würde auch vorteilhaft den Fixierungsbereich der Befestigungsschraube 17 in der Nut des senkrecht stehenden Profils 2 vergrößern. Zudem wäre ein solcher Kippverbinder universeller verwendbar.

Bei der in Fig. 1, Fig. 1A und Fig. 1B dargestellten Ausführungsform kann durch Ansetzen eines INBUS-Schlüssels im INBUS-Napf 33 die Befestigungsschraube in normaler Drehrichtung gedreht werden. Das Innengewinde 41 des Verbinderkörpers 13 ist dazu vorliegend als Linksgewinde mit dem Außengewinde 25 des Schafts 27 ausgelegt. Bei der in Fig. 1, Fig. 1A und Fig. 1B dargestellten Ausführungsform sind die Gewinde 41, 25 als Feingewinde mit einer Steigung von 0,75 mm pro Gewindegang, statt normalerweise mit einer Steigung von 1,25 mm pro Gewindegang, ausgelegt. Die Befestigungsschraube 17 lässt sich dadurch besonders leichtgängig anziehen, wobei entsprechend der Pfeildarstellung 49 in Fig. 1 der Verbinderkörper 11 mit seiner einer Kippkante 51 gegenüberliegenden Seite 53 von der Hinterschneidung 5 weg zum Nutinneren 9 gedrückt wird. Durch die Kippung 49 entsteht ein Zug auf die Ankerschraube 19, welche - aufgrund ihrer Festlegung in der Aufnahmeöffnung 35 des senkrecht aufstehenden zweiten Profils 2 - das zweite Profil 2 an die durch den Profilsteg 3 gebildete Oberfläche des ersten Profils 1 anzieht und dort festlegt.

Bei dem in Fig. 1 gezeigten Kippverbinder handelt es sich um einen besonders leicht herstellbaren und dennoch einen sicheren Profilverbund 10 gewährleistenden Teil eines in Fig. 1A und Fig. 1B gezeigten Verbindungssystems. Um den Verbinder 11 in die Nut 7 einzubringen, besteht zwischen dem Verbinderkörper 13 und dem Profilsteg 3 ein leichtes Spiel, damit der Verbinder 11 eingeschoben werden kann und die beschriebene Hebelwirkung zwischen Kippkante 51 und dem die Kippbewegung 49 ausführenden Teil 53 des Verbinderkörpers 13 zum Tragen kommen kann.

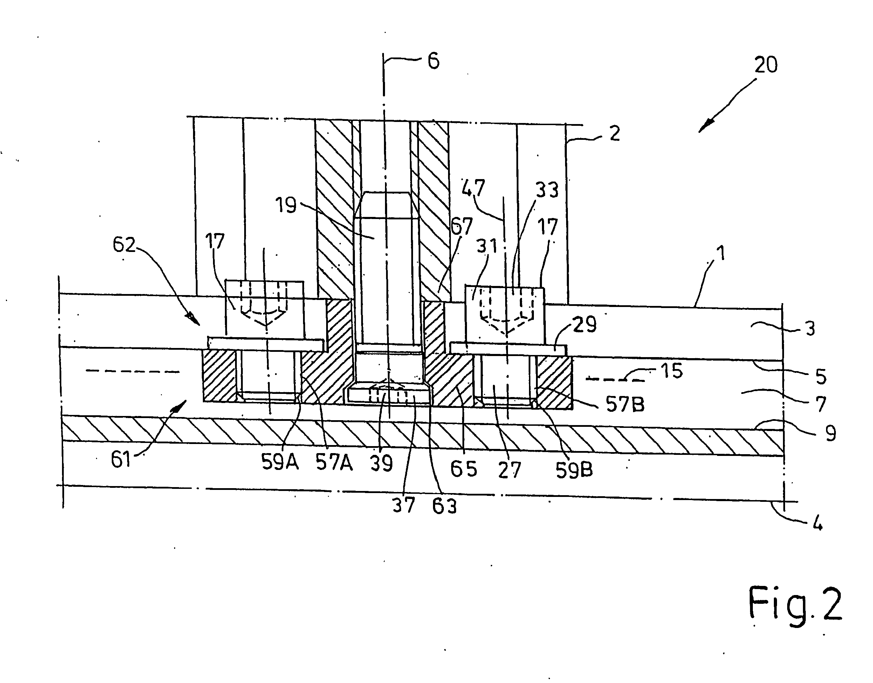

Fig. 2 zeigt eine weitere bevorzugte Ausführungsform eines Verbindersystems bei einem Profilverbund 20 im Vergleich zu Fig. 1. Das Verbindersystem weist vorliegend einen Verbinder 61 auf, der genau zwei zweite mit einem Innengewinde 57A, 57B versehene Öffnungen 59A, 59B aufweist. In diese greift jeweils eine Befestigungsschraube 17 ein, wie sie bereits in Bezug auf Fig. 1 beschrieben wurde. Entsprechend sind gleiche Bezugszeichen angegeben. Die erste Öffnung 63 ist vorliegend mittig zwischen den zweiten Öffnungen 59A, 59B angeordnet und nimmt wiederum eine bereits in Bezug auf Fig. 1 beschriebene Ankerschraube 19 auf - für die Ankerschraube 19 sind wiederum gleiche Bezugszeichen angegeben. Vorliegend weist der Verbinderkörper 65 des Verbinders 61 im Bereich der ersten Öffnung 63 eine Verdrehsicherung auf - vorliegend in Form einer die Öffnungsberandung der ersten Öffnung 63 bildenden eckigen Erhebung, über welche der Verbinder 61 in den einander zugewandten Stirnseiten der Profilstege 3 an der Nuttaille festgelegt werden kann. Zusätzlich ist es von Vorteil, dass bei der Vormontage des Verbinders über die Öffnungsberandung ein Abstand der flachen Bereiche zum senkrecht aufstehenden Profil 2 und damit zu einer Innenseite einer Hinterschneidung des waagerechten Profils 1 vorgegeben ist.

Beim Anziehen der beiden Befestigungsschrauben 17 wird die Ankerschraube 19 über den Verbinder 61 als ein Zugverbinder beidseitig mit Zug belastet. Die Ankerschraube 19 wird in die Nut 7 gezogen und dadurch wird das senkrecht aufstehende zweite Profil 2 am ersten Profil 1 festlegt.

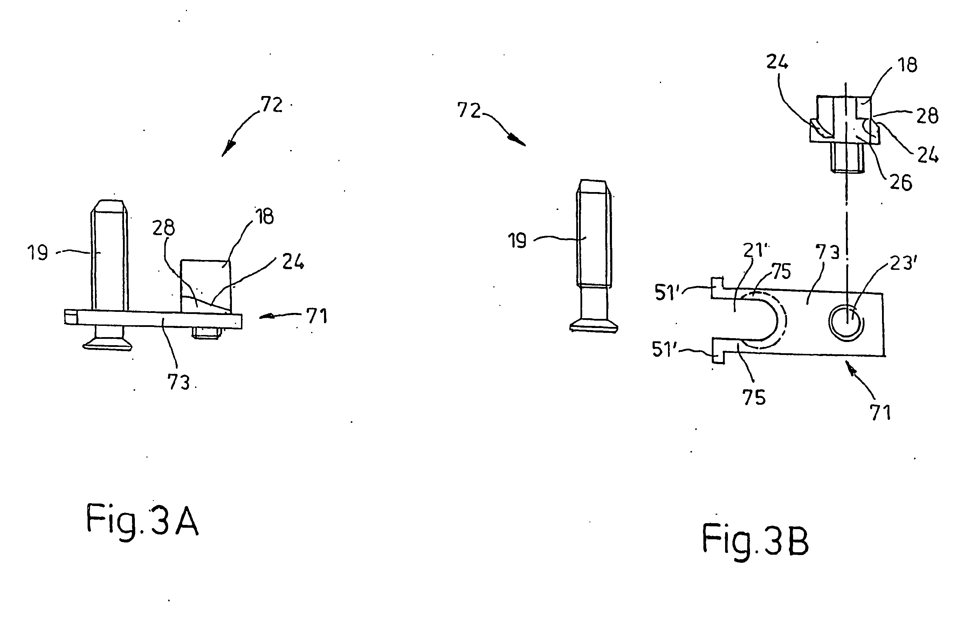

Fig. 3A und Fig. 3B zeigt eine weitere Ausführungsform eines Verbindersystems 72, bei dem die Befestigungsschraube 18 als eine Hebelschraube wirkt und der Verbinder 61 als ein Kippverbinder mit einer Kippkante 51' jenseits der ersten Öffnung 21' wirkt - ganz ähnlich wie in Fig. 1 gezeigt. Dementsprechend wurden für einander entsprechende Teile der Figur gleiche Bezugszeichen angegeben.

Im Unterschied zu dem in Fig. 1 gezeigten Verbinder 11 ist der Verbinder 71 der Fig. 3A, Fig. 3B mit einer ersten Öffnung 21' versehen, welche in Form eines in Längsrichtung des Verbinderkörpers 73 verlaufende durch gabelartige Arme 75 berandeten Schlitzes des Verbinderkörpers 73 gebildet ist. Die gabelartigen Arme 75 weisen vorliegend eine endseitige quer zur Längsrichtung des Verbinderkörpers verlaufende Verbreiterung 77 auf, die zur Verlängerung einer Kippkante 51' und damit zur Verbesserung des Kippverhaltens des Verbinders 71 dient. Dadurch wird der Kippverbinder auch in seiner Lage stabilisiert. Die Verbreiterung 77 kann gegebenenfalls auch so ausgeführt werden, dass sie einer Spreizung der gabelartigen Arme 75 dadurch entgegenwirkt, dass sie außenseitig an einer Nutinnenseite anliegt.

Die dazu vorgesehene Befestigungsschraube 18 weist wiederum einen Flansch 28 auf, der vorliegend jedoch entlang seines Umfangs zwei gegenüberliegende Unterbrechungen 26 aufweist, wobei im Bereich dieser Unterbrechung der Schraubenkopf die Abmessung des INBUS-Einstecknapfes aufweist. In einer besonders bevorzugten Weise weist der Flansch 28 vorliegend eine mit Steigung versehene Rampe 24 auf. Die Rampe 24 kann auf ihrer Oberseite mit einer Struktur, beispielsweise mit einer Riffelung oder mit Rastzähnen versehen sein, die einem Lösen der Schraube entgegenwirkt. Vorliegend ist die Steigung der Rampe 24 so, dass bei einer Viertelumdrehung der Befestigungsschraube 18 ein Profilverbund geschlossen ist, so dass es sich vorliegend um eine Rampe 24 mit einer Vierteldrehungssteigung handelt. Diese Maßnahme gewährleistet vorteilhaft, dass ein Überdrehen der Befestigungsschraube 18 und damit ein Herausrutschen der Befestigungsschraube 18 aus einer Nut 7 oberhalb einer Viertelumdrehung vermieden wird. Vorteilhaft kann eine Rampe dazu an ihrem oberen Ende eine als Anschlag wirkende zusätzliche Erhöhung aufweisen. Grundsätzlich kann eine Befestigungsschraube mit Rampe, beispielsweise die Befestigungsschraube 18 oder eine Abwandlung davon, z.B. abgewandelt betreffend die Unterbrechungen 26 oder die Steigung der Rampe 24 bei allen vorgenannten Ausführungsformen eines Verbinders 11, 61, 71 zum Einsatz kommen.

Der Verbinder 71 gemäß Fig. 3A, Fig. 3B lässt sich besonders einfach dazu verwenden, um ein zweites Profil 2 nachträglich - das heißt zwischen zwei bereits bestehenden senkrecht aufstehenden Profilen - an ein erstes Profil 1 anzubinden. Dazu wird das zweite Profil 2 mit einer Ankerschraube 19 auf das erste Profil 1 aufgestellt, so dass die Ankerschraube in die Nut 7 des ersten Profils 1 ragt. Danach wird der Verbinder 71 seitlich in die Nut und mit seinen gabelartigen Armen in die Taille und die Ankerschraube 19 zwischen dem angesenkten Schraubenkopf 37 und dem Gewinde M8 umgreifend eingeschoben. Danach lässt sich das Verbindersystem wie bereits anhand von Fig. 1, Fig. 1A und Fig. 1B beschrieben, anziehen, um das erste Profil 1 und das zweite Profil 2 miteinander zu verbinden.

Zusammenfassend wird ein Verbinder 11, 61, 71 zum Festlegen in einer mit einer durch einen Profilsteg 3 gebildeten Hinterschneidung 5 versehenen Nut 7 eines ersten Profils 1 angegeben, mit einem Verbinderkörper 13, 65, 75, der aufweist: eine erste Öffnung 21, 63, 21' für eine Ankerschraube 19 und mindestens eine zweite mit einem Innengewinde 41, 57A, 57B versehene Öffnung 23, 23', 59A, 59B für eine Befestigungsschraube 17, 18. Gemäß dem Konzept der Erfindung erstreckt sich der Verbinderkörper 13, 65, 75 im Wesentlichen flach entlang einer Verbinderkörperebene 15. Vorzugsweise beträgt die größte, insbesondere über einen maßgeblichen Bereich angenommene, Dicke D des Verbinderkörpers 13, 65, 75 nicht mehr als 20% einer Längserstreckung L des Verbinderkörpers 13, 65, 75. Dies hat den Vorteil, dass der Verbinderkörper 13, 65, 75 in Form eines Blechteils und/oder eines Stanz- und/oder Biegeteils gebildet werden kann. Eine zur Bildung eines Verbindersystems vorgesehene Befestigungsschraube 17, 18 weist einends einen ein Außengewinde 25 tragenden Schaft 27 auf. Erfindungsgemäß ist ein Flansch 29 angeformt, der sich von einem Schraubenkopf 31 radial nach außen erstreckt. Der Flansch 29 stützt sich beim Drehen der Befestigungsschraube 17, 18 im Innengewinde 41 des Verbinders 11, 61, 71 gegen den Profilsteg 3 des ersten Profils 1 ab. Das Verbindersystem 11, 61, 71 sieht gemäß dem Konzept der Erfindung zusätzlich eine Ankerschraube 19 vor. Gemäß einer ersten Variante der Erfindung ist der Verbinder 11 als ein Kippverbinder ausgebildet, wobei die erste Öffnung in Form eines gewindefreien Schraubenloches gebildet ist. Gemäß einer zweiten Variante der Erfindung ist der Verbinder 71 als ein Kippverbinder gebildet, wobei die erste Öffnung 21 in Form eines in Längsrichtung des Verbinderkörpers verlaufenden durch gabelartige Arme 75 berandeten Schlitzes des Verbinderkörpers 73 gebildet ist. Gemäß einer dritten Variante der Erfindung ist der Verbinder 61 als ein Zugverbinder ausgebildet.

## Patentansprüche

1. Verbindersystem (12, 72) mit einem Verbinder (11, 61, 71) einer Befestigungsschraube (17, 18) und einer Ankerschraube (19), wobei der Verbinder (11, 61, 71) zum Festlegen in einer mit einer durch einen Profilsteg (3) gebildeten Hinterschneidung (5) versehenen Nut (7) eines ersten Profils (1) ausgelegt ist und einen Verbinderkörper (13, 65, 75) hat, der aufweist:
eine erste Öffnung (21, 63, 31') für eine Ankerschraube (19),
eine zweite mit einem Innengewinde (41) versehene Öffnung (23, 23', 59A, 59B) für die Befestigungsschraube (17, 18), wobei die Ankerschraube (19) zur Anordnung in der ersten Öffnung (21, 21', 63) des Verbinders (11, 61, 71) vorgesehen ist und die Befestigungsschraube (17, 18) zur Anordnung in der zweiten Öffnung (23, 59A, 59B) vorgesehen ist,
wobei der Verbinderkörper (13) genau eine zweite mit einem Innengewinde (41, 57A, 57B) versehene Öffnung (23) für die Befestigungsschraube (17) aufweist und genau eine Befestigungsschraube (17, 18) zur Anordnung in der genau einen zweiten Öffnung (23') vorgesehen ist, wobei die Befestigungsschraube (17, 18) zur Wirkung als eine Hebelschraube vorgesehen ist,
**dadurch gekennzeichnet, dass**
sich der Verbinderkörper (13, 65, 75) im Wesentlichen flach entlang einer Verbinderkörperebene (15) erstreckt, und die Befestigungsschraube (17, -18) einends einen ein Außengewinde (25) tragenden Schaft (27) aufweist und einen angeformten Flansch (28, 29), der sich von einem Schraubenkopf (31) radial nach außen erstreckt und der Verbinder (11, 71) zur Wirkung als ein Kippverbinder mit einer Kippkante (51, 51') jenseits der ersten Öffnung (21, 21') vorgesehen ist.

2. Verbindersystem (12, 72) nach Anspruch 1
**dadurch gekennzeichnet, dass**
die größte, insbesondere über einen maßgeblichen Bereich angenommene, Dicke (D) des Verbinderkörpers (13, 65) nicht mehr als 20% einer Längserstreckung des Verbinderkörpers (13, 65) beträgt.

3. Verbindersystem (12, 72) nach Anspruch 1 oder 2
**dadurch gekennzeichnet, dass**
der Verbinderkörper (13, 65) wenigstens im Bereich der ersten Öffnung (21, 63) verstärkt ist.

4. Verbindersystem (12, 72) nach einem der Ansprüche 1 bis 3
**dadurch gekennzeichnet, dass**
die Verstärkung in Form einer Dickenvergrößerung (D) des Verbinderkörpers (13, 65) gebildet ist und/oder der Verbinderkörper (13, 65) eine oder mehrere, insbesondere entlang einer länglichen Erstreckung verlaufende, Versteifungsrippen aufweist und/oder der Verbinderkörper (13, 65) einen oder mehrere, insbesondere entlang einer länglichen Erstreckung verlaufende, insbesondere seitliche, Stege aufweist.

5. Verbindersystem (12, 72) nach einem der Ansprüche 1 bis 4
**dadurch gekennzeichnet, dass**
der Verbinderkörper (13, 65) in Form eines Blechteils und/oder eines Stanz- und/oder Biegeteils gebildet ist.

6. Verbindersystem (12, 72) nach einem der Ansprüche 1 bis 5
**dadurch gekennzeichnet, dass**
die zweite Öffnung (23, 59A, 59B) einen dem Profilsteg zuwendbaren Gewindekragen (43) aufweist.

7. Verbindersystem (12, 72) nach einem der Ansprüche 1 bis 6
**dadurch gekennzeichnet, dass**
eine Gewindeachse (47) in der zweiten Öffnung (23, 59A, 59B) schräg gegen eine Senkrechte zur Verbinderkörperebene (15) verläuft.

8. Verbindersystem (12, 72) nach einem der Ansprüche 1 bis 7
**dadurch gekennzeichnet, dass**
das Innengewinde (41, 57A, 57B) ein Linksgewinde ist.

9. Verbindersystem (12, 72) nach einem der Ansprüche 1 bis 8
**dadurch gekennzeichnet, dass**
das Innengewinde (41, 57A, 57B) eine Feingewinde ist.

10. Verbindersystem (12, 72) nach einem der Ansprüche 1 bis 9
**dadurch gekennzeichnet, dass**
der Verbinderkörper (13, 65) im Bereich der ersten Öffnung (21, 63), ein Mittel zur Verdrehsicherung des Verbinderkörpers (13, 65) aufweist.

11. Verbindersystem (12, 72) nach einem der Ansprüche 1 bis 10
**dadurch gekennzeichnet, dass** eine als eckige Erhebung gebildete Öffnungsberandung zur verdrehgesicherten Festlegung des Verbinderkörpers (13, 65) am Profilsteg (3) vorgesehen ist.

12. Verbindersystem (12, 72) nach einem der Ansprüche 1 bis 11
**dadurch gekennzeichnet, dass**
die erste Öffnung (21, 63) in Form eines gewindefreien Schraubenloches gebildet ist.

13. Verbindersystem (12, 72) nach einem der Ansprüche 1 bis 12
**dadurch gekennzeichnet, dass**
die zweite Öffnung (21') in Form eines in Längsrichtung des Verbinderkörpers (73) verlaufenden durch gabelartige Arme (73) berandeten Schlitzes des Verbinderkörpers (73) gebildet ist.

14. Verbindersystem (12, 72) nach einem der Ansprüche 1 bis 13
**dadurch gekennzeichnet, dass**
ein gabelartiger Arm (75) eine endseitige, quer zur Längsrichtung des Verbinderkörpers (73) verlaufende Verbreiterung (51') aufweist.

15. Profilverbund mit einem ersten Profil (1) mit einer durch einen Profilsteg (3) gebildeten Hinterschneidung versehenen Nut (7) und einem zweiten Profil (2) mit einer Aufnahmeöffnung und einem Verbindersystem (12, 72) nach einem der Ansprüche 1 bis 14.

## Claims

1. Connector system (12, 72) comprising a connector (11, 61, 71), a fastening screw (17, 18) and an anchoring screw (19), the connector (11, 61, 71) being designed for fixing in a groove (7) of a first profile (1), which groove is provided with an undercut (5) formed by a profiled web (3), and having a connector body (13, 65, 75) which comprises: a first opening (21, 63, 31') for an anchoring screw (19) and a second opening (23, 23', 59A, 59B), provided with an internal thread (41), for the fastening screw (17, 18), the anchoring screw (19) being provided for arrangement in the first opening (21, 21', 63) of the connector (11, 61, 71) and the fastening screw (17, 18) being provided for arrangement in the second opening (23, 59A, 59B), the connector body (13) comprising exactly one second opening (23), provided with an internal thread (41, 57A, 57B), for the fastening screw, and exactly one fastening screw (17, 18) being provided for arrangement in the exactly one second opening (23'), the fastening screw (17, 18) being provided so as to act as a lever screw, **characterised in that** the connector body (13, 65, 75) extends in a substantially planar manner along a connector body plane (15), and the fastening screw (17, 18) comprises at one end a shank (27), bearing an external thread (25), and an integrally formed flange (28, 29), which extends radially outward from a screw head (31), and the connector (11, 71) is provided so as to act as a tilting connector having a tilting edge (51, 51') on the far side of the first opening (21, 21').

2. Connector system (12, 72) according to claim 1, **characterised in that** the greatest thickness (D) of the connector body (13, 65), in particular when taken over a relevant region, is no more than 20% of a longitudinal extent of the connector body (13, 65).

3. Connector system (12, 72) according to either claim 1 or claim 2, **characterised in that** the connector body (13, 65) is reinforced at least in the region of the first opening (21, 63).

4. Connector system (12, 72) according to any one of claims 1 to 3, **characterised in that** the reinforcement is formed as a thickening (D) of the connector body (13, 65) and/or the connector body (13, 65) comprises one or more stiffening ribs, in particular extending along an elongate extent, and/or the connector body (13, 65) comprises one or more webs, in particular lateral webs, in particular extending along an elongate extent.

5. Connector system (12, 72) according to any one of claims 1 to 4, **characterised in that** the connector body (13, 65) is formed as a sheet-metal part and/or a punched and/or bent part.

6. Connector system (12, 72) according to any one of claims 1 to 5, **characterised in that** the second opening (23, 59A, 59B) comprises a threaded collar (43) which can be turned to face the profiled web.

7. Connector system (12, 72) according to any one of claims 1 to 6, **characterised in that** a thread axis (47) in the second opening (23, 59A, 59B) extends oblique to a perpendicular to the plane (15) of the connector body.

8. Connector system (12, 72) according to any one of claims 1 to 7, **characterised in that** the internal thread (41, 57A, 57B) is a left-handed thread.

9. Connector system (12, 72) according to any one of claims 1 to 8, **characterised in that** the internal thread (41, 57A, 57B) is a fine-pitch thread.

10. Connector system (12, 72) according to any one of claims 1 to 9, **characterised in that** the connector body (13, 65) comprises, in the region of the first opening (21, 63), a means for securing the connector body (13, 65) against rotation.

11. Connector system (12, 72) according to any one of claims 1 to 10, **characterised in that** an opening delimitation, formed as an angular elevation, is provided for fixing the connector body (13, 65) to the profiled web (3) in a manner secured against rotation.

12. Connector system (12, 72) according to any one of claims 1 to 11, **characterised in that** the first opening (21, 63) is formed as a threadless screw-hole.

13. Connector system (12, 72) according to any one of claims 1 to 12, **characterised in that** the second opening (21') is formed as a slot in the connector body (73), which slot extends in the longitudinal direction of the connector body (73) and is delimited by fork-like arms (73).

14. Connector system (12, 72) according to any one of claims 1 to 13, **characterised in that** a fork-like arm (75) comprises an end widening (51') extending transverse to the longitudinal direction of the connector body (73).

15. Profiled composite, comprising a first profile (1), having a groove (7) provided with an undercut formed by a profiled web (3), and a second profile (2), having a receiving opening and a connector system (12, 72) according to any one of claims 1 to 14.

## Revendications

1. Système de raccord (12, 72) comprenant un connecteur (11, 61, 71) d'une vis de fixation (17, 18) et une vis d'ancrage (19), le connecteur (11, 61, 71) étant conçu pour être fixé dans une rainure (7) d'un premier profilé (1) pourvue d'une contre-dépouille (5) formée par une nervure profilée (3), et ayant un corps de connecteur (13, 65, 75), qui présente : une première ouverture (21, 63, 31') pour une vis d'ancrage (19), une deuxième ouverture (23, 23', 59A, 59B) pourvue d'un filetage interne (41) pour la vis de fixation (17, 18), la vis d'ancrage (19) étant prévue pour être disposée dans la première ouverture (21, 21', 63) du connecteur (11, 61, 71) et la vis de fixation (17, 18) étant prévue pour être disposée dans la deuxième ouverture (23, 59A, 59B), le corps de connecteur (13) présentant exactement une deuxième ouverture (23) pourvue d'un filetage interne (41, 57A, 57B) pour la vis de fixation (17) et exactement une vis de fixation (17, 18) étant prévue pour être disposée dans l'exactement une deuxième ouverture (23'), la vis de fixation (17, 18) étant prévue pour servir de vis de levier, **caractérisé en ce que** le corps de connecteur (13, 65, 75) s'étend essentiellement à plat le long d'un plan de corps de connecteur (15), et la vis de fixation (17, 18) présente à une extrémité une tige (27) portant un filetage extérieur (25) et une bride façonnée (28, 29), qui s'étend depuis une tête de vis (31) radialement vers l'extérieur, et le connecteur (11, 71) étant prévu pour agir en tant que connecteur basculant avec une arête de basculement (51, 51') au-delà de la première ouverture (21, 21').

2. Système de connecteur (12, 72) selon la revendication 1, **caractérisé en ce que** la plus grande épaisseur (D), adoptée notamment sur une plage considérable, du corps de connecteur (13, 65), ne vaut pas plus de 20% d'une étendue longitudinale du corps de connecteur (13, 65).

3. Système de connecteur (12, 72) selon la revendication 1 ou 2, **caractérisé en ce que** le corps de connecteur (13, 65) est renforcé au moins dans la région de la première ouverture (21, 63).

4. Système de connecteur (12, 72) selon l'une quelconque des revendications 1 à 3, **caractérisé en ce que** le renforcement est formé en forme d'une augmentation de l'épaisseur (D) du corps de connecteur (13, 65) et/ou le corps de connecteur (13, 65) présente une ou plusieurs ailettes de renforcement s'étendant notamment le long d'une étendue longitudinale, et/ou le corps de connecteur (13, 65) présente une ou plusieurs nervures s'étendant notamment le long d'une étendue longitudinale, notamment latérales.

5. Système de connecteur (12, 72) selon l'une quelconque des revendications 1 à 4, **caractérisé en ce que** le corps de connecteur (13, 65) est formé sous forme de pièce en tôle et/ou de pièce estampée et/ou cintrée.

6. Système de connecteur (12, 72) selon l'une quelconque des revendications 1 à 5, **caractérisé en ce que** la deuxième ouverture (23, 59A, 59B) présente un col fileté (43) pouvant être tourné vers la nervure profilée.

7. Système de connecteur (12, 72) selon l'une quelconque des revendications 1 à 6, **caractérisé en ce qu'**un axe fileté (47) dans la deuxième ouverture (23, 59a, 59b) s'étend obliquement vers une perpendiculaire au plan du corps de connecteur (15).

8. Système de connecteur (12, 72) selon l'une quelconque des revendications 1 à 7, **caractérisé en ce que** le filetage interne (41, 57A, 57B) est un filetage à gauche.

9. Système de connecteur (12, 72) selon l'une quelconque des revendications 1 à 8, **caractérisé en ce que** le filetage interne (41, 57A, 57B) est un filetage fin.

10. Système de connecteur (12, 72) selon l'une quelconque des revendications 1 à 9, **caractérisé en ce que** le corps de connecteur (13, 65) présente, dans la région de la première ouverture (21, 63), un moyen pour solidariser en rotation le corps de connecteur (13, 65).

11. Système de connecteur (12, 72) selon l'une quelconque des revendications 1 à 10, **caractérisé en ce qu'**une bordure d'ouverture formée sous forme de rehaussement polygonal est prévue pour la fixation solidaire en rotation du corps de connecteur (13, 65) sur la nervure profilée (3).

12. Système de connecteur (12, 72) selon l'une quelconque des revendications 1 à 11, **caractérisé en ce que** la première ouverture (21, 63) est formée en forme de trou de vis sans filetage.

13. Système de connecteur (12, 72) selon l'une quelconque des revendications 1 à 12, **caractérisé en ce que** la deuxième ouverture (21') est formée en forme de fente du corps de connecteur (73) s'étendant dans la direction longitudinale du corps de connecteur (73) et bordée par des bras de type fourche (73).

14. Système de connecteur (12, 72) selon l'une quelconque des revendications 1 à 13, **caractérisé en ce qu'**un bras de type fourche (75) présente un élargissement (51') à l'extrémité, s'étendant transversalement à la direction longitudinale du corps de connecteur (73).

15. Assemblage profilé comprenant un premier profilé (1) avec une rainure (7) pourvue d'une contre-dépouille formée par une nervure profilée (3) et un deuxième profilé (2) avec une ouverture de réception et un système de raccord (12, 72) selon l'une quelconque des revendications 1 à 14.
